# EUROPEAN PATENT APPLICATION

(11) **EP 3 689 595 A1**
(43) Date of publication of application: **05.08.2020**
(21) Application number: 18863063.6
(22) Date of filing: 28.09.2018
(51) Int. Cl.: B32B 15/08, B32B 3/24, B32B 7/02, G02B 5/00

(54) **LAMINATE**

(30) Priority: 29.09.2017 JP 2017189996
(71) Applicant: FUJIFILM Corporation, Tokyo 106-8620 (JP)
(72) Inventor: SATO, Fumikazu, Haibara-gun Shizuoka 421-0396 (JP)
(74) Representative: Hoffmann Eitle
(86) International application number: PCT/JP2018/036394
(87) International publication number: WO 2019/066011

(57) **Abstract**

Provided is a laminate in which excellent visibility is achieved by improving image blurring or the like. This laminate has a metal substrate provided with a plurality of through-holes penetrating therethrough in a thickness direction, and a resin layer provided on at least one surface of the metal substrate. In a case where an average opening ratio of the through-holes is G%, and an opening ratio of the through-holes having an opening diameter of 100 µm or less is H%, the average opening ratio G% satisfies 50% ≤ average opening ratio G% ≤ 80%, and a ratio R represented by the opening ratio H%/the average opening ratio G% satisfies 0.0001 ≤ R ≤ 0.5.

## Description

### BACKGROUND OF THE INVENTION

### 1. Field of the Invention

The present invention relates to a laminate including a metal substrate provided with a plurality of through-holes penetrating therethrough in a thickness direction and a resin layer provided on at least one surface of the metal substrate. In particular, the present invention relates to a laminate that defines an average opening ratio of through-holes and an opening ratio of through-holes having an opening diameter of 100 µm or less.

### 2. Description of the Related Art

Conventionally, there has been proposed an optical film that is disposed on an object to limit a visual field or improve light transmittance.

JP2008-185767A discloses a translucent optical film which has, inside the film, a low refractive index layer and a high refractive index layer alternately and continuously at predetermined intervals so as to be perpendicular to front and back surfaces of the film and parallel to each other. The optical film disclosed in JP2008-185767A is configured such that light incident on the optical film allows to be transmitted while changing a direction of the light by totally reflecting the light at an interface between the low refractive index layer and the high refractive index layer in the film, whereas light other than the light that is totally reflected is absorbed and diffused in the low refractive index layer. However, the optical film disclosed in JP2008-185767A requires a low refractive index layer and a high refractive index layer to be provided alternately and continuously inside the film and therefore has a complicated structure.

On the other hand, WO2017/150099A discloses a composite body which has a simple configuration and is capable of providing a molded article excellent in both appearance and light transmittance. The composite body disclosed in WO2017/150099A has a simple configuration and includes an aluminum substrate having a plurality of through-holes in a thickness direction and a resin layer provided on at least one surface of the aluminum substrate, in which an average opening diameter of the through-holes is 0.1 to 100 µm and an average opening ratio by the through-holes is 1% to 50%.

### SUMMARY OF THE INVENTION

As described above, the composite body disclosed in WO2017/150099A is capable of providing a molded article which is excellent in both appearance and light transmittance, but such a composite body is currently required to have further visibility of displayed contents such as characters and pictures displayed on an object in a case where the composite body is disposed on the object. For example, with respect to the visibility, it is required that a finer line width and a narrower pitch can be visually recognized in a line-and-space pattern, that is, image blurring is small.

An object of the present invention is to provide a laminate in which excellent visibility is achieved by improving image blurring or the like.

In order to achieve the foregoing object, the present invention provides a laminate including a metal substrate provided with a plurality of through-holes penetrating therethrough in a thickness direction; and a resin layer provided on at least one surface of the metal substrate, in which, in a case where an average opening ratio of the through-holes is G%, and an opening ratio of the through-holes having an opening diameter of 100 µm or less is H%, the average opening ratio G% satisfies 50% ≤ average opening ratio G% ≤ 80%, and a ratio R represented by the opening ratio H%/the average opening ratio G% satisfies 0.0001 ≤ R ≤ 0.5.

In a case where a thickness of the metal substrate is T µm, a ratio Q represented by the average opening ratio G%/the thickness T µm preferably satisfies 1 ≤ Q ≤ 50.

The resin layer is preferably provided on each surface of the metal substrate.

The resin layer preferably has a total light transmittance of 60% or more in a wavelength range of 380 to 780 nm.

The resin layer is preferably made of any one of polyethylene terephthalate, polyethylene, polypropylene, acrylic, or polyimide.

The resin layer preferably has an average thickness of 12 to 200 µm.

The metal substrate preferably has an average thickness of 5 µm or less.

The ratio R preferably satisfies 0.0001 ≤ R < 0.01.

The metal substrate is preferably made of a metal selected from the group consisting of aluminum, copper, silver, gold, platinum, stainless steel, steel, titanium, tantalum, molybdenum, niobium, zirconium, tungsten, beryllium copper, phosphor bronze, brass, nickel silver, tin, zinc, iron, nickel, Permalloy, nichrome, Alloy 42, Kovar, Monel, Inconel, and Hastelloy.

According to the present invention, image blurring or the like is improved to thereby achieve excellent visibility.

### BRIEF DESCRIPTION OF THE DRAWINGS

Fig. 1 is a schematic cross-sectional view showing an example of a laminate according to an embodiment of the present invention.
Fig. 2 is a schematic plan view showing an example of the laminate according to the embodiment of the present invention.
Fig. 3 is a schematic cross-sectional view showing another example of the laminate according to the embodiment of the present invention.
Fig. 4 is a schematic cross-sectional view showing one step of a method for producing the laminate according to the embodiment of the present invention.
Fig. 5 is a schematic cross-sectional view showing one step of the method for producing the laminate according to the embodiment of the present invention.
Fig. 6 is a schematic cross-sectional view showing one step of the method for producing the laminate according to the embodiment of the present invention.
Fig. 7 is a schematic cross-sectional view showing one step of the method for producing the laminate according to the embodiment of the present invention.
Fig. 8 is a schematic cross-sectional view showing one step of the method for producing the laminate according to the embodiment of the present invention.
Fig. 9 is a schematic cross-sectional view showing one step of the method for producing the laminate according to the embodiment of the present invention.
Fig. 10 is a schematic cross-sectional view showing one step of another example of the method for producing the laminate according to the embodiment of the present invention.
Fig. 11 is a schematic cross-sectional view showing one step of another example of the method for producing the laminate according to the embodiment of the present invention.

### DESCRIPTION OF THE PREFERRED EMBODIMENTS

Hereinafter, the laminate according to the embodiment of the present invention will be described in detail based on suitable embodiments shown in the accompanying drawings.

Note that the drawings described below are illustrative for explaining the present invention, and the present invention is not limited to the drawings shown below.

In the following, the term "to" indicating a numerical range includes numerical values described on both sides thereof. For example, in a case where ε is a numerical value α to a numerical value β, the range of ε is a range including the numerical value α and the numerical value β, which is α ≤ ε ≤ β in mathematical symbols.

Unless otherwise specified, an angle such as "an angle represented by a specific numerical value", "parallel", or "vertical" includes an error range generally accepted in the relevant technical field.

In addition, the term "entire surface" or the like includes an error range generally accepted in the relevant technical field.

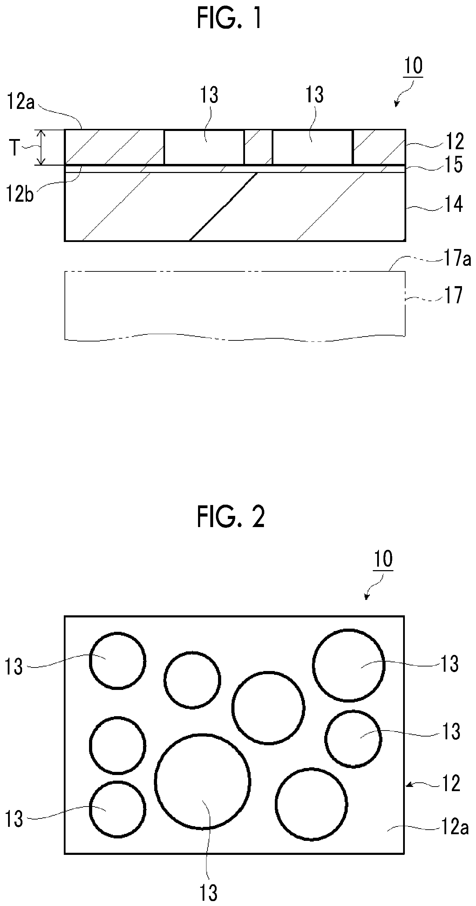

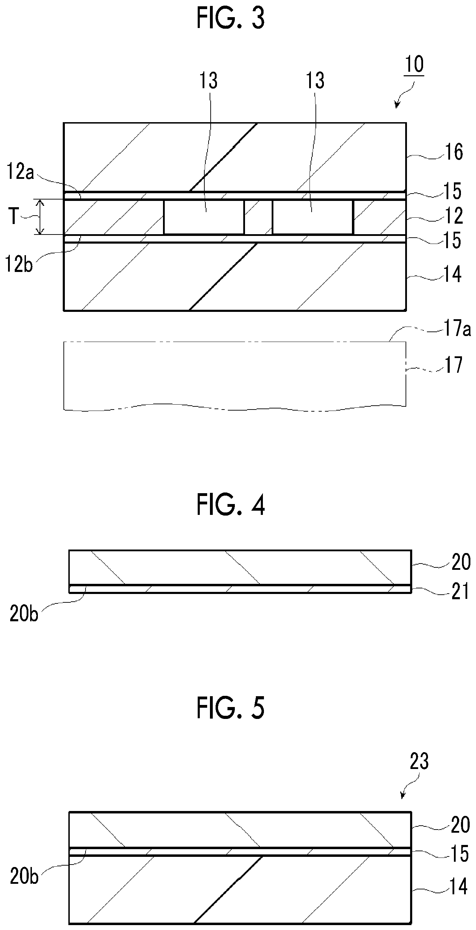

Fig. 1 is a schematic cross-sectional view showing an example of a laminate according to an embodiment of the present invention, and Fig. 2 is a schematic plan view showing an example of the laminate according to the embodiment of the present invention. Fig. 3 is a schematic cross-sectional view showing another example of the laminate according to the embodiment of the present invention.

As shown in Fig. 1, a laminate 10 includes a metal substrate 12 provided with a plurality of through-holes 13 penetrating therethrough in a thickness direction, and a resin layer 14 provided on a back surface 12b of the metal substrate 12 through an adhesive layer 15. The metal substrate 12 is provided with a plurality of through-holes 13 as shown in Fig. 2, for example. The laminate 10 is disposed with the resin layer 14 facing a front surface 17a of an object 17, for example. In a case where the laminate 10 is viewed from a front surface 12a side of the metal substrate 12, displayed contents such as characters and pictures displayed on the front surface 17a of the object 17 can be visually recognized, and image blurring or the like is improved, thus providing excellent visibility.

The term "image blurring" is related to the visibility, and indicates what resolution of the displayed contents can be visually recognized among the displayed contents as described above. For example, the image blurring can be evaluated by a combination of a line width and a pitch of a line-and-space pattern. Visual recognition of a pattern with a finer line width and a narrower pitch means that the resolution is high, that is, the image blurring is small.

In the laminate 10, the average opening ratio of the through-holes 13 is G (%), and the opening ratio of the through-holes 13 having an opening diameter of 100 µm or less is H (%). The average opening ratio G (%) satisfies 50% ≤ average opening ratio G (%) ≤ 80%. The ratio R represented by the opening ratio H (%)/the average opening ratio G (%) satisfies 0.0001 ≤ R ≤ 0.5. Note that the unit of the ratio R is dimensionless.

In a case where the average opening ratio G satisfies 50% ≤ average opening ratio G (%) ≤ 80%, the diffraction of light transmitted through the through-holes 13 and the interference of light transmitted the through-holes 13 can be suppressed, and therefore displayed contents such as characters and pictures displayed on the object can be clearly visually recognized, thus indicating that the visibility is satisfactory and the image blurring is small. The average opening ratio G preferably satisfies 60% ≤ average opening ratio G (%) ≤ 70%, and in a case where the average opening ratio G is within the above-mentioned preferred range, the visibility is further excellent and the image blurring is further reduced.

On the other hand, in a case where the average opening ratio G is out of the range of 50% ≤ average opening ratio G (%) ≤ 80%, the diffraction of light transmitted through the through-holes 13 and the interference of light transmitted the through-holes 13 occur and therefore displayed contents cannot be clearly visually recognized, thus indicating that the visibility is poor and the image blurring is large.

In a case where the ratio R satisfies 0.0001 ≤ R ≤ 0.5, the diffraction of light transmitted through the through-holes 13 can be suppressed, and displayed contents such as characters and pictures displayed on the object can be clearly visually recognized, thus indicating that the visibility is satisfactory and the image blurring is small. In a case where the ratio R satisfies 0.008 ≤ R ≤ 0.07, the image blurring becomes smaller and therefore the visibility becomes further excellent.

On the other hand, with respect to the ratio R, in a case of R > 0.5, there are many fine holes of 100 µm or less, so that the diffraction of light transmitted through the through-holes 13 occurs and image blurring easily occurs, and therefore an image is blurred and the visibility is deteriorated. In a case of R < 0.0001, the number of fine holes of 100 µm or less is small and the number of through-holes 13 having a large diameter of more than 100 µm becomes dominant, so that the shielding properties are deteriorated. In addition, with respect to the ratio R, it is difficult to produce the laminate having R < 0.0001.

In addition, in a case where the thickness of the metal substrate 12 is T (µm), the ratio Q (%/µm) represented by the average opening ratio G (%)/the thickness T (µm) preferably satisfies 1 ≤ Q (%/µm) ≤ 50 and more preferably 20 ≤ Q (%/µm) ≤ 35. In a case where the ratio Q (%/µm) satisfies 1 ≤ Q ≤ 50, scattering on an inner wall surface of the through-hole 13 of the metal substrate 12 is suppressed.

In addition, the metal substrate 12 preferably has a thickness T of 5 µm or less. In a case where the thickness T is 5 µm or less, scattering on the inner wall surface of the through-hole 13 of the metal substrate 12 can be reduced.

The laminate 10 is not limited to the configuration shown in Fig. 1, and may have a configuration in which the resin layer 14 is provided on the front surface 12a of the metal substrate 12 instead of the back surface 12b thereof. In addition, the laminate 10 may have a configuration in which the resin layer 14 is provided on each surface of the metal substrate 12. For example, as shown in Fig. 3, the laminate 10 may have a configuration in which the resin layers 14 are provided on the front surface 12a and the back surface 12b of the metal substrate 12 through the adhesive layer 15. In this case, one of the resin layers 14 is disposed facing the front surface 17a of the object 17. The resin layer 14 improves the scratch resistance and workability of the laminate 10. By providing the resin layers 14 on both surfaces of the metal substrate 12, the metal substrate 12 is protected by the resin layer 14, so that direct touch with the metal substrate 12 is eliminated and therefore the resistance to scratch due to rubbing or the like is improved.

In addition, the laminate 10 is not necessarily required to have the adhesive layer 15 as long as the resin layer 14 can be provided on at least one of the front surface 12a or the back surface 12b of the metal substrate 12, and may have a configuration without the adhesive layer 15.

The average opening ratio G by the through-holes 13 is determined as follows. A parallel light optical unit is installed on one surface side of the metal substrate 12, parallel light is allowed to pass therethrough, and the front surface 12a of the metal substrate 12 is imaged from the other surface of the metal substrate 12 with an optical microscope at a magnification of 100 times to obtain a surface image of the metal substrate. For a visual field (5 places) of 100 mm × 75 mm in the range of 10 cm × 10 cm of the obtained surface image of the metal substrate 12, the ratio (opening area/geometric area) is calculated from the sum of the opening areas of the through-holes 13 projected by the transmitted parallel light and the area of the visual field (geometric area), and then the average value in each visual field (5 places) is calculated as the average opening ratio.

The opening ratio H of the through-hole in which the opening diameter of the through-hole 13 is 100 µm or less is determined as follows. Using the surface image used for obtaining the average opening ratio G, the through-holes whose periphery is annularly continuous in the surface image are extracted and the diameters of the extracted through-holes are measured to obtain opening diameters. Through-holes having an opening diameter of 100 µm or less or through-holes having an opening diameter of more than 100 µm are extracted from a plurality of opening diameters. The total area of the extracted through-holes having an opening diameter of 100 µm or less or the extracted through-holes having an opening diameter of more than 100 µm is determined. The difference between the opening area obtained in a case of determining the average opening ratio G and the total area of the extracted through-holes is obtained to determine the opening ratio H.

As described above, the laminate 10 has a metal substrate having the average opening ratio G of through-holes and the ratio R between the average opening ratio G and the opening ratio H of the through-hole in which the opening diameter of the through-hole is 100 µm or less = opening ratio H/average opening ratio G which are within the above-mentioned range, and a resin layer provided on at least one surface of the metal substrate. This makes it possible to reduce the diffraction of the transmitted light through the through-holes and the interference of the transmitted light through the through-holes in a case where the laminate 10 is used for an application having light transmittance, for example, for an optical filter, thus resulting in improved image blurring of light and improved visibility due to the sharpening of a projected image. As described above, in a case where the laminate 10 is disposed on the front surface 17a (see Fig. 1) of the object 17 (see Fig. 1), image blurring or the like of the displayed contents such as characters and pictures displayed on the front surface 17a is improved and therefore the displayed contents can be observed in a state excellent in visibility.

In addition, the resin layer 14 makes it easy to process the laminate 10 into a molded article such as a metallic decorative body used for lighting purposes.

Hereinafter, the laminate will be described in more detail.

### [Metal substrate]

The metal substrate is not particularly limited in composition thereof as long as it is a metal including an alloy. The metal substrate is made of a metal selected from the group consisting of aluminum, copper, silver, gold, platinum, stainless steel, steel, titanium, tantalum, molybdenum, niobium, zirconium, tungsten, beryllium copper, phosphor bronze, brass, nickel silver, tin, zinc, iron, nickel, Permalloy, nichrome, Alloy 42, Kovar, Monel, Inconel, and Hastelloy.

As the aluminum for use in the metal substrate, a known aluminum alloy, for example, 1000 series such as Aluminum 1085, 3000 series such as Aluminum 3003, or 8000 series such as Aluminum 8021, can be used. More specifically, for example, an aluminum alloy having an alloy number shown in Table 1 below can be used as the aluminum alloy.

**[Table 1]**

| Alloy No. | Si (% by mass) | Fe (% by mass) | Cu (% by mass) |
|---|---|---|---|
| 1085 | 0.02 | 0.04 | <0.01 |
| 1N30 | 0.11 | 0.45 | 0.02 |
| 8021 | 0.04 | 1.44 | <0.01 |
| 3003 | 0.60 | 0.70 | 0.10 |

### <Thickness>

The metal substrate preferably has an average thickness of 5 µm or less.

The average thickness of the metal substrate is an average value of thicknesses measured at any five points using a contact type film thickness meter (digital electronic micrometer). In a case of measuring the thickness of the metal substrate in a state of the laminate, the thickness of the metal substrate may be determined in such a manner that the thickness of the entire laminate is measured with a contact type film thickness meter, the metal substrate or the resin material is peeled off and the thickness thereof is measured, and then the thickness of the metal substrate is determined from the difference between the thickness of the entire laminate and the thickness of the metal substrate or resin material.

### <Through-hole>

The through-hole of the metal substrate preferably has an average opening diameter of 30 to 50 µm.

### [Resin layer]

The resin layer is provided on at least one of the front surface or the back surface of the metal substrate as described above. The resin layer improves the scratch resistance and workability of the laminate.

The resin layer is made of, for example, any one of polyethylene terephthalate, polyethylene, polypropylene, acrylic, and polyimide.

In addition, the resin layer preferably has a total light transmittance of 60% or more in a wavelength range of 380 to 780 nm. In a case where the total light transmittance described above is 60% or more, sufficient visibility can be ensured in a case of being used for an application having light transmittance, for example, for an optical filter. The total light transmittance described above is more preferably 80% to 92% from the viewpoint of reducing image blurring due to resin haze or the like.

In addition, the resin layer is preferably optically neutral without changing the tone from the viewpoint of image blurring. Therefore, the resin layer is preferably flat with a constant light transmittance value in a wavelength range of 380 to 780 nm.

The total light transmittance can be measured using a spectrophotometer (U-3000, manufactured by Hitachi, Ltd.).

### <Thickness>

The resin layer preferably has an average thickness of preferably 12 to 200 µm, more preferably 12 to 100 µm, still more preferably 25 to 100 µm, and particularly preferably 50 to 100 µm, from the viewpoint of handleability and workability.

The average thickness of the resin layer is an average value of thicknesses measured at any five points using a contact type film thickness meter (digital electronic micrometer).

### [Adhesive layer]

The adhesive layer is not particularly limited as long as it is capable of bonding the metal substrate and the resin layer together, and a known adhesive can be used. For example, a two-component curable polyurethane-based adhesive can be used.

The adhesive layer preferably has the same total light transmittance as that of the metal substrate and the resin layer from the viewpoint of the light transmittance of the entire laminate. Furthermore, the adhesive layer is preferably optically neutral without changing the tone from the viewpoint of image blurring. Therefore, the resin layer is preferably flat with a constant light transmittance value in a wavelength range of 380 to 780 nm.

In addition, the adhesive layer is not necessarily required as long as the resin layer can be provided on the metal substrate as described above, and the adhesive layer may not be provided.

Next, the method for producing a laminate will be described.

Figs. 4 to 9 are schematic cross-sectional views shown in the order of steps of the method for producing a laminate according to the embodiment of the present invention.

First, a metal member 20 (see Fig. 4) serving as the metal substrate 12 is prepared. The metal member 20 is made of aluminum, for example. Hereinafter, the metal member 20 made of aluminum will be described as an example.

As shown in Fig. 4, for example, an adhesive 21 is applied onto a back surface 20b of the metal member 20.

Next, the resin layer 14 is bonded to the metal member 20 through the adhesive 21. The adhesive 21 is cured to form the adhesive layer 15 as shown in Fig. 5, whereby a composite 23 of the metal member 20 and the resin layer 14 is obtained. The method for providing the resin layer 14 is not particularly limited to the above-mentioned method. The step of providing the resin layer 14 is referred to as a resin layer forming step, which will be described in detail later.

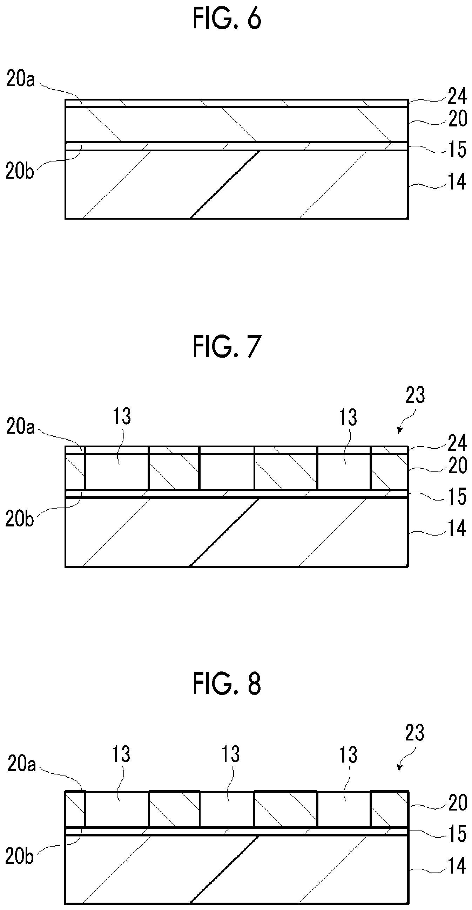

Next, as shown in Fig. 6, a film forming treatment is carried out on a front surface 20a of the metal member 20 to form an aluminum hydroxide film 24. The aluminum hydroxide film 24 is formed on the front surface 20a of the metal member 20, for example, by carrying out an electrolytic treatment using the metal member 20 as a cathode. The step of forming the aluminum hydroxide film 24 is referred to as a film forming step, which will be described in detail later.

Next, as shown in Fig. 7, through-holes 13 that penetrate through the aluminum hydroxide film 24 and the metal member 20 in the thickness direction of the metal member 20 are formed in the aluminum hydroxide film 24 and the metal member 20. The through-holes 13 can be formed using, for example, an electrolytic dissolution treatment. The step of forming the through-hole 13 is referred to as a through-hole forming step, which will be described in detail later.

Next, the aluminum hydroxide film 24 is dissolved to remove the aluminum hydroxide film 24 as shown in Fig. 8. The step of removing the aluminum hydroxide film 24 is referred to as a film removing step, which will be described in detail later.

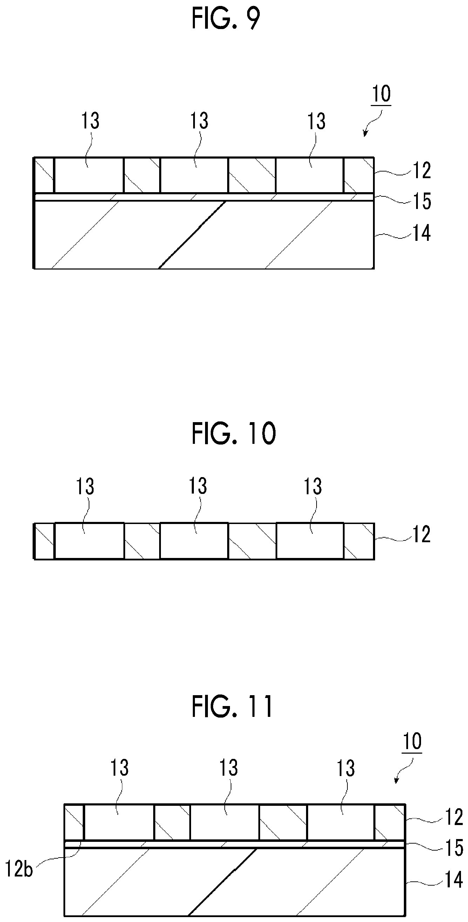

Next, the through-holes 13 are subjected to, for example, an etching treatment so as to have predetermined thickness and average opening ratio. Thus, the laminate 10 of the metal substrate 12 having a plurality of through-holes 13 and the resin layer 14 can be obtained as shown in Fig. 9.

The method for producing the metal substrate 12 having a plurality of through-holes 13 is not limited to the above-mentioned method. For example, a plurality of through-holes 13 may be formed in the metal member 20 (see Fig. 4) serving as the metal substrate 12 using a photolithography method to obtain the metal substrate 12 having a plurality of through-holes 13 shown in Fig. 10. Next, as shown in Fig. 11, the laminate 10 is obtained by bonding the resin layer 14 to the back surface 12b of the metal substrate 12 through the adhesive layer 15.

Hereinafter, the method for producing a laminate will be described in more detail.

### [Method for producing composite body]

### [Film forming step]

The film forming step is a step of forming an aluminum hydroxide film by carrying out a film forming treatment on a surface of an aluminum metal substrate as described above.

### <Film forming treatment>

The above-mentioned film forming treatment is not particularly limited, and for example, the same treatment as the conventionally known aluminum hydroxide film forming treatment can be carried out.

For example, the conditions and apparatuses described in paragraphs [0013] to [0026] of JP2011-201123A can be appropriately employed for the film forming treatment.

The conditions for the film forming treatment vary depending on the electrolytic solution used and therefore cannot be determined unconditionally; but in general, the conditions for the film forming treatment are suitably an electrolytic solution concentration of 1% to 80% by mass, a liquid temperature of 5°C to 70°C, a current density of 0.5 to 60 A/dm², a voltage of 1 to 100 V, and an electrolysis time of 1 second to 20 minutes, which are adjusted so as to obtain a desired coating amount.

It is preferable to carry out an electrochemical treatment using nitric acid, hydrochloric acid, sulfuric acid, phosphoric acid, oxalic acid, or a mixed acid of two or more of these acids as the electrolytic solution.

In a case where the electrochemical treatment is carried out in an electrolytic solution containing nitric acid or hydrochloric acid, a direct current may be applied between an aluminum substrate and a counter electrode, or an alternating current may be applied therebetween. In a case where a direct current is applied to the aluminum substrate, the current density is preferably 1 to 60 A/dm² and more preferably 5 to 50 A/dm². In a case where the electrochemical treatment is continuously carried out, it is preferably carried out by a liquid power supply method in which power is supplied to the aluminum substrate through an electrolytic solution.

The amount of the aluminum hydroxide film formed by the film forming treatment is preferably 0.05 to 50 g/m² and more preferably 0.1 to 10 g/m².

### [Through-hole forming step]

The through-hole forming step is a step of forming a through-hole penetrating through the aluminum hydroxide film and the metal member by carrying out an electrolytic dissolution treatment after the film forming step.

### <Electrolytic dissolution treatment>

The above-mentioned electrolytic dissolution treatment is not particularly limited and is carried out using a direct current or an alternating current. An acidic solution can be used for the electrolytic solution. Above all, it is preferable to carry out the electrochemical treatment using at least one acid of nitric acid and hydrochloric acid, and it is more preferable to carry out the electrochemical treatment using a mixed acid obtained by adding at least one or more acids of sulfuric acid, phosphoric acid, and oxalic acid to these acids.

As the acidic solution which is an electrolytic solution, the electrolytic solutions described in the specifications of US4671859A, US4661219A, US4618405A, US4600482A, US4566960A, US4566958A, US4566959A, US4416972A, US4374710A, US4336113A, and US4184932A can also be used in addition to the above-mentioned acids.

The concentration of the acidic solution is preferably 0.1% to 2.5% by mass and particularly preferably 0.2% to 2.0% by mass. The liquid temperature of the acidic solution is preferably 20°C to 80°C and more preferably 30°C to 60°C.

In addition, an aqueous solution containing the above-mentioned acids as a main component can be used by adding a nitric acid compound having a nitric acid ion (such as aluminum nitrate, sodium nitrate, or ammonium nitrate) or a hydrochloric acid compound having a hydrochloric acid ion (such as aluminum chloride, sodium chloride, or ammonium chloride), and at least one sulfuric acid compound having a sulfuric acid ion (such as aluminum sulfate, sodium sulfate, or ammonium sulfate) in the range of from 1 g/L to saturation to the aqueous solution of an acid having a concentration of 1 to 100 g/L.

Here, the phrase "containing ... as a main component" means that the main component in the aqueous solution is contained in an amount of 30% by mass or more and preferably 50% by mass or more with respect to the total components added to the aqueous solution. Hereinafter, the same applies to other components.

In addition, a metal contained in an aluminum alloy, such as iron, copper, manganese, nickel, titanium, magnesium, or silica, may be dissolved in the aqueous solution containing the above-mentioned acids as a main component. It is preferable to use a liquid in which aluminum chloride, aluminum nitrate, aluminum sulfate, or the like is added to an aqueous solution having an acid concentration of 0.1% to 2% by mass such that aluminum ions are 1 to 100 g/L.

A direct current is mainly used in the electrochemical dissolution treatment, but in a case where an alternating current is used, the alternating current power wave is not particularly limited, and a sine wave, a rectangular wave, a trapezoidal wave, a triangular wave, or the like is used. Among these, a rectangular wave or a trapezoidal wave is preferable, and a trapezoidal wave is particularly preferable.

### (Nitric acid electrolysis)

Through-holes having an average opening diameter of 0.1 µm or more and less than 100 µm can be easily formed by an electrochemical dissolution treatment using an electrolytic solution containing nitric acid as a main component (hereinafter, also referred to as "nitric acid dissolution treatment").

Here, the nitric acid dissolution treatment is preferably an electrolytic treatment carried out using a direct current under conditions that the average current density is 5 A/dm² or more and the electric quantity is 50 C/dm² or more because it is easy to control the dissolution point of through-hole formation. The average current density is preferably 100 A/dm² or less, and the electric quantity is preferably 10,000 C/dm² or less.

In addition, the concentration and temperature of the electrolytic solution in nitric acid electrolysis are not particularly limited. The electrolysis can be carried out at a temperature of 30°C to 60°C using a nitric acid electrolytic solution having a high concentration, for example, a nitric acid concentration of 15% to 35% by mass, or the electrolysis can be carried out at a high temperature, for example, a temperature of 80°C or higher using a nitric acid electrolytic solution having a nitric acid concentration of 0.7% to 2% by mass.

In addition, the electrolysis can be carried out using an electrolytic solution obtained by mixing at least one of sulfuric acid, oxalic acid, or phosphoric acid having a concentration of 0.1% to 50% by mass with the above-mentioned nitric acid electrolytic solution.

### (Hydrochloric acid electrolysis)

Through-holes having an average opening diameter of 1 µm or more and less than 100 µm can also be easily formed by an electrochemical dissolution treatment using an electrolytic solution containing hydrochloric acid as a main component (hereinafter, also referred to as "hydrochloric acid dissolution treatment").

Here, the hydrochloric acid dissolution treatment is preferably an electrolytic treatment carried out using a direct current under conditions that the average current density is 5 A/dm² or more and the electric quantity is 50 C/dm² or more because it is easy to control the dissolution point of through-hole formation. The average current density is preferably 100 A/dm² or less, and the electric quantity is preferably 10,000 C/dm² or less.

In addition, the concentration and temperature of the electrolytic solution in hydrochloric acid electrolysis are not particularly limited. The electrolysis can be carried out at a temperature of 30°C to 60°C using a hydrochloric acid electrolytic solution having a high concentration, for example, a hydrochloric acid concentration of 10% to 35% by mass, or the electrolysis can be carried out at a high temperature, for example, a temperature of 80°C or higher using a hydrochloric acid electrolytic solution having a hydrochloric acid concentration of 0.7% to 2% by mass.

In addition, the electrolysis can be carried out using an electrolytic solution obtained by mixing at least one of sulfuric acid, oxalic acid, or phosphoric acid having a concentration of 0.1% to 50% by mass with the above-mentioned hydrochloric acid electrolytic solution.

### [Film removing step]

The film removing step is a step of carrying out a chemical dissolution treatment to dissolve and remove the aluminum hydroxide film.

The above-mentioned film removing step is capable of removing the aluminum hydroxide film by carrying out, for example, an acid etching treatment or alkaline etching treatment which will be described later.

### <Acid etching treatment>

The above-mentioned dissolution treatment is a treatment for dissolving the aluminum hydroxide film using a solution that preferentially dissolves aluminum hydroxide over aluminum (hereinafter, referred to as "aluminum hydroxide-dissolving solution").

Here, the aluminum hydroxide-dissolving solution is preferably, for example, an aqueous solution containing at least one selected from the group consisting of nitric acid, hydrochloric acid, sulfuric acid, phosphoric acid, oxalic acid, a chromium compound, a zirconium-based compound, a titanium-based compound, a lithium salt, a cerium salt, a magnesium salt, sodium silicofluoride, zinc fluoride, a manganese compound, a molybdenum compound, a magnesium compound, a barium compound, and elemental halogen.

Specifically, examples of the chromium compound include chromium (III) oxide and chromium (VI) anhydride.

Examples of the zirconium-based compound include zirconium ammonium fluoride, zirconium fluoride, and zirconium chloride.

Examples of the titanium compound include titanium oxide and titanium sulfide.

Examples of the lithium salt include lithium fluoride and lithium chloride.

Examples of the cerium salt include cerium fluoride and cerium chloride.

Examples of the magnesium salt include magnesium sulfide.

Examples of the manganese compound include sodium permanganate and calcium permanganate.

Examples of the molybdenum compound include sodium molybdate.

Examples of the magnesium compound include magnesium fluoride pentahydrate.

Examples of the barium compound include barium oxide, barium acetate, barium carbonate, barium chlorate, barium chloride, barium fluoride, barium iodide, barium lactate, barium oxalate, barium perchlorate, barium selenate, barium selenite, barium stearate, barium sulfite, barium titanate, barium hydroxide, barium nitrate, and hydrates thereof.

Among the barium compounds described above, barium oxide, barium acetate, and barium carbonate are preferable, and barium oxide is particularly preferable.

Examples of the elemental halogen include chlorine, fluorine, and bromine.

Above all, the above-mentioned aluminum hydroxide-dissolving solution is preferably an aqueous solution containing an acid. Examples of the acid include nitric acid, hydrochloric acid, sulfuric acid, phosphoric acid, and oxalic acid. The acid may be a mixture of two or more acids. Above all, it is preferable to use nitric acid as the acid.

The acid concentration is preferably 0.01 mol/L or more, more preferably 0.05 mol/L or more, and still more preferably 0.1 mol/L or more. The upper limit of the acid concentration is not particularly limit, but generally it is preferably 10 mol/L or less and more preferably 5 mol/L or less.

The dissolution treatment is carried out by bringing the aluminum substrate on which the aluminum hydroxide film is formed into contact with the above-mentioned dissolution solution. The method of bringing the substrate into contact with the dissolution solution is not particularly limited, and examples thereof include a dipping method and a spray method, among which a spray method is preferable.

The dipping method is a treatment in which an aluminum substrate on which an aluminum hydroxide film is formed is dipped in the above-mentioned dissolution solution. It is preferable to carry out the stirring during the dipping treatment, since the treatment without unevenness is carried out.

The dipping treatment time is preferably 10 minutes or more, more preferably 1 hour or more, still more preferably 3 hours or more, and even still more preferably 5 hours or more.

The spray method is an advantageous method for continuously forming through-holes, and the time for applying a liquid by spraying can be determined by the treatment length and the transport speed. In the spray method, a fresh liquid can be supplied to a reaction interface, so that an efficient treatment is possible. The spray treatment time is preferably 1 second or more and 30 minutes or less, and more preferably 2 seconds or more and 20 minutes or less.

### <Etching treatment>

The etching treatment is, for example, an alkaline etching treatment in which a surface layer is dissolved by bringing the above-mentioned aluminum hydroxide film into contact with an alkaline solution.

Examples of the alkali used in the alkaline solution include a caustic alkali and an alkali metal salt. Specifically, examples of the caustic alkali include sodium hydroxide (caustic soda) and caustic potash. Examples of the alkali metal salt include alkali metal silicates such as sodium metasilicate, sodium silicate, potassium metasilicate, and potassium silicate; alkali metal carbonates such as sodium carbonate and potassium carbonate; alkali metal aluminates such as sodium aluminate and potassium aluminate; alkali metal aldonates such as sodium gluconate and potassium gluconate; and alkali metal hydrogen phosphates such as secondary sodium phosphate, secondary potassium phosphate, tertiary sodium phosphate, and tertiary potassium phosphate. Among these, a solution of a caustic alkali and a solution containing both a caustic alkali and an alkali metal aluminate are preferable from the viewpoint of high etching rate and low cost. In particular, an aqueous solution of sodium hydroxide is preferable.

The concentration of the alkaline solution is preferably 0.1% to 50% by mass and more preferably 0.2% to 10% by mass. In a case where aluminum ions are dissolved in the alkaline solution, the concentration of aluminum ions is preferably 0.01% to 10% by mass and more preferably 0.1% to 3% by mass. The temperature of the alkaline solution is preferably 10°C to 90°C. The treatment time is preferably 1 to 120 seconds.

Examples of the method for bringing the aluminum hydroxide film into contact with the alkaline solution include a method in which an aluminum substrate on which an aluminum hydroxide film is formed is passed through a tank containing an alkaline solution; a method in which an aluminum substrate on which an aluminum hydroxide film is formed is dipped in a tank containing an alkaline solution; and a method in which an alkaline solution is sprayed onto a surface (aluminum hydroxide film) of an aluminum substrate on which an aluminum hydroxide film is formed.

### [Resin layer forming step]

The resin layer forming step is a step of providing a resin layer on a metal member having no through-holes.

The method for forming the resin layer is not particularly limited, and examples thereof include dry lamination, wet lamination, extrusion lamination, and inflation lamination.

With respect to the dry lamination, for example, the conditions and apparatus described in paragraphs [0067] to [0078] of JP2013-121673A can be appropriately employed.

The present invention is basically configured as described above. Although the laminate according to the embodiment of the present invention has been described in detail above, the present invention is not limited to the above-mentioned embodiments, and various improvements or modifications may be made without departing from the spirit of the present invention.

### Examples

The features of the present invention will be described in more detail with reference to the following Examples. The materials, reagents, used amounts, substance amounts, ratios, treatment details, treatment procedures, and the like shown in the following Examples can be appropriately changed without departing from the spirit of the present invention. Accordingly, the scope of the present invention should not be construed as being limited by the specific examples shown below.

In the present examples, laminates of Examples 1 to 9 and Comparative Examples 1 to 3 were produced, and image blurring, shielding properties, and scratch resistance were evaluated with respect to the laminates of Examples 1 to 9 and Comparative Examples 1 to 3. The results are shown in Table 3 below. In Table 3, the "opening ratio occupied by a hole diameter of 100 µm or less" has the same meaning as the "opening ratio of a through-hole in which the opening diameter of the through-hole is 100 µm or less". Hereinafter, image blurring, shielding properties, and scratch resistance will be described.

### <Evaluation of image blurring>

With reference to a resolution chart (a test chart for cameras, series J, manufactured by Pearl Optical Industry Co., Ltd.) in which characters having a diameter of 2 cm are described, a transparent polyethylene terephthalate (PET) sheet depicting the patterns a to h shown in Table 2 below was placed at a position 1 cm away from the lower part of the resin layer side of the composite body. A 10000 lux light emitting diode (LED) light (SG-355B: manufactured by Gentos Co., Ltd.) was placed at a position 4 cm away from the lower part of the resin layer side, and turned on.

Then, a test was carried out to see whether the observer could recognize the characters written on the PET sheet from a position 50 cm away from the composite body at an angle of 45° in a bright environment with an illuminance of 1000 lux based on the illuminance standard. The results of the above-mentioned test were evaluated according to the following evaluation standards. In addition, the rating of A or higher was regarded as a practically acceptable range.

### Evaluation standards

AA: It is visible from a to h
A: It is visible from a to f
B: It is visible from a to c
C: It is visible for only a

### <Evaluation of shielding properties>

With reference to a resolution chart (a test chart for cameras, series J, manufactured by Pearl Optical Industry Co., Ltd.) in which characters having a diameter of 2 cm are described, a transparent polyethylene terephthalate (PET) sheet depicting the patterns a to h shown in Table 2 below was placed at a position 1 cm away from the lower part of the resin layer side of the composite body. Then, a test was carried out to see whether the observer could recognize the characters written on the PET sheet from a position 50 cm away from the composite body at an angle of 45° in a bright environment with an illuminance of 1000 lux based on the illuminance standard. The results of the above-mentioned test were evaluated according to the following evaluation standards. In addition, the rating of A or higher was regarded as a practically acceptable range.

### Evaluation standards

AA: It is visible for only a
A: It is visible from a to c
B: It is visible from a to f
C: It is visible from a to h

**[Table 2]**

| Pattern type | a | B | c | d | e | f | g | h |
|---|---|---|---|---|---|---|---|---|
| Black line width (mm) | 14 | 10 | 8 | 6 | 5.1 | 3.7 | 3 | 2.5 |
| Black line thickness/black line (mm) | 2.1 | 1.9 | 1.3 | 1 | 1 | 0.7 | 0.6 | 0.5 |
| Number of black lines (n) | 3 | 3 | 3 | 3 | 3 | 3 | 3 | 3 |
| Pitch of black line (mm) | 10.85 | 7.15 | 6.05 | 4.5 | 3.6 | 2.65 | 2.1 | 1.75 |

### <Evauaton of scratch resistance>

A non-woven fabric (BEMCOT (registered trademark) M-3, manufactured by Asahi Kasei Corporation) was applied to a friction element of a device that reciprocates at a speed of 6 m/min (a Gakushin-type color fastness rubbing tester Model AB-301, manufactured by Tester Sangyo Co., Ltd.). The laminate was installed on a test specimen stand, and the state thereof after rubbing back and forth with a load of 4.9 N/cm² was visually evaluated. The results of the visual evaluation were evaluated according to the following evaluation standards. In addition, the rating of A or higher was regarded as a practically acceptable range.

### Evaluation standards

AA: No change in appearance was observed in the laminate even after 30 reciprocations.
A: The whiteness of the laminate slightly increased between 21 and 30 reciprocations.
B: The whiteness of the laminate slightly increased between 11 and 20 reciprocations.
C: The whiteness of the laminate slightly increased between 1 and 10 reciprocations.
D: The whiteness of the laminate greatly increased between 1 and 9 reciprocations.

Hereinafter, the laminates of Example 1 to Example 9 and Comparative Example 1 to Comparative Example 3 will be described.

### (Example 1)

The laminate of Example 1 will be described.

### <Fabrication of laminate>

A 100 mm square aluminum foil (alloy number: 1N30, thickness: 9 µm, manufactured by UACJ Corporation) was prepared as a metal substrate. In addition, two-component curable polyurethane-based adhesives (SU3600A and SU3600B, manufactured by Sanyu Rec Co., Ltd.) were weighed to a mass ratio of 30:100 and dissolved in ethyl acetate to prepare an adhesive layer coating liquid having a solid content concentration of 30% by mass.

The adhesive layer coating liquid was applied onto the above-mentioned aluminum foil, and a 100 mm square 125 µm thick PET film (Cosmoshine (registered trademark) A4100 (single-sided easily adhesive layer), thickness: 125 µm, manufactured by Toyobo Co., Ltd.), which constitutes a resin layer, was bonded thereto. The resulting structure was cured at a drying temperature of 70°C for a drying time of 1 minute to produce a composite of an aluminum foil and a resin layer. The adhesive thickness at this time was 3 µm.

### (Through-hole treatment)

### Aluminum hydroxide film forming treatment (film forming step)

Using an electrolytic solution (nitric acid concentration: 1%, sulfuric acid concentration: 0.2%, aluminum concentration: 0.5%) kept at a temperature of 50°C, and the above-mentioned aluminum foil as a cathode, an electrolytic treatment was carried out to form an aluminum hydroxide film on the aluminum foil. The electrolytic treatment was carried out with a direct-current power source. The direct current density was 33 A/dm², and the electric quantity was 400 C/dm².

The formation of the aluminum hydroxide film was followed by washing with water by spraying.

The thickness of the aluminum hydroxide film was measured by observing a section cut out by focused ion beam (FIB) cutting with a scanning electron microscope (SEM) and found to be 1 µm.

### Electrolytic dissolution treatment (through-hole forming step)

Next, using an electrolytic solution (nitric acid concentration: 1%, sulfuric acid concentration: 0.2%, aluminum concentration: 0.5%) kept at a temperature of 50°C, and an aluminum foil as an anode, an electrolytic treatment was carried out under the conditions of a current density of 40 A/dm² and a total electric quantity of 400 C/dm² to form through-holes penetrating through the aluminum foil and the aluminum hydroxide film. The electrolytic treatment was carried out with a direct-current power source.

The formation of the through-holes was followed by washing with water by spraying, and the aluminum foil was dried.

### Aluminum hydroxide film removing treatment (film removing step)

Next, the aluminum foil after the electrolytic dissolution treatment was dipped in an aqueous solution (liquid temperature: 35°C) having a sodium hydroxide concentration of 5% by mass and an aluminum ion concentration of 0.5% by mass for 30 seconds, and then dipped in an aqueous solution (liquid temperature: 50°C) having a sulfuric acid concentration of 30% and an aluminum ion concentration of 0.5% by mass for 20 seconds, whereby the aluminum hydroxide film was dissolved and removed. This was followed by washing with water by spraying, and the aluminum foil was dried to obtain an aluminum foil having through-holes.

### (Alkaline etching step)

The composite body of the aluminum foil and the resin layer was subjected to an etching treatment by spraying using an aqueous solution having a sodium hydroxide concentration of 26% by mass and an aluminum ion concentration of 6.5% by mass so as to have a predetermined thickness and average opening ratio. The etching treatment was carried out at a temperature of 32°C for a dipping time of 40 seconds. Thus, a laminate of the aluminum foil having through-holes and the resin layer was obtained.

### (Example 2)

Example 2 was carried out in the same manner as in Example 1, except that the dipping time in the alkaline etching treatment of the composite body of the aluminum foil and the resin layer was 35 seconds as compared to Example 1.

### (Example 3)

Example 3 was carried out in the same manner as in Example 1, except that the dipping time in the alkaline etching treatment of the composite body of the aluminum foil and the resin layer was 30 seconds as compared to Example 1.

### (Example 4)

Example 4 was carried out in the same manner as in Example 1, except that the resin layers were provided on both surfaces of the aluminum foil, as compared to Example 1.

In Example 4, an adhesive layer coating liquid was applied to the aluminum foil side of the composite of the aluminum foil and the resin layer, and a 100 mm square PET film (Cosmoshine (registered trademark) A4100 (product number), thickness: 125 µm, manufactured by Toyobo Co., Ltd.) was bonded thereon. The resulting structure was cured at a drying temperature of 70°C for a drying time of 1 minute. The adhesive thickness at this time was 3 µm. Thus, the resin layers were provided on both surfaces of the aluminum foil.

The adhesive layer coating liquid used was an adhesive layer coating liquid which was prepared by weighing two-component curable polyurethane-based adhesives (SU3600A and SU3600B, manufactured by Sanyu Rec Co., Ltd.) in a mass ratio of 30:100 and dissolving them in ethyl acetate so as to have a solid content concentration of 30% by mass.

### (Example 5)

Example 5 was carried out in the same manner as in Example 1, except that the method for producing the composite of the aluminum foil and the resin layer was different from that of Example 1.

In Example 5, an adhesive layer coating liquid, which was prepared by weighing two-component curable polyurethane-based adhesives (SU3600A and SU3600B, manufactured by Sanyu Rec Co., Ltd.) in a mass ratio of 30:100 and dissolving them in ethyl acetate so as to have a solid content concentration of 30% by mass, was applied onto a 100 mm square aluminum foil (alloy number: 1N30, thickness: 9 µm, manufactured by UACJ Corporation), and then a 100 mm square 50 µm thick acrylic film (ACRYPLEN HBS006, manufactured by Mitsubishi Chemical Corporation) as a resin layer was bonded thereon. The resulting structure was cured at a drying temperature of 70°C for a drying time of 1 minute to produce a composite of an aluminum foil and a resin layer. The adhesive thickness at this time was 3 µm.

### (Example 6)

Example 6 was carried out in the same manner as in Example 1, except that the method for producing the composite of the aluminum foil and the resin layer was different from that of Example 1.

In Example 6, an adhesive layer coating liquid, which was prepared by weighing two-component curable polyurethane-based adhesives (SU3600A and SU3600B, manufactured by Sanyu Rec Co., Ltd.) in a mass ratio of 30:100 and dissolving them in ethyl acetate so as to have a solid content concentration of 30% by mass, was applied onto a 100 mm square aluminum foil (alloy number: 1N30, thickness: 9 µm, manufactured by UACJ Corporation), and then a 100 mm square 25 µm thick polyimide film (TORMED, thickness: 9 µm, manufactured by I.S.T Corporation) as a resin layer was bonded thereon. The resulting structure was cured at a drying temperature of 70°C for a drying time of 1 minute to produce a composite of an aluminum foil and a resin layer. The adhesive thickness at this time was 3 µm.

### (Example 7)

Example 7 was carried out in the same manner as in Example 1, except that the method for producing the composite of the aluminum foil and the resin layer was different from that of Example 1 and the thickness of the PET film used as the resin layer was different from that of Example 1.

In Example 7, an adhesive layer coating liquid, which was prepared by weighing two-component curable polyurethane-based adhesives (SU3600A and SU3600B, manufactured by Sanyu Rec Co., Ltd.) in a mass ratio of 30:100 and dissolving them in ethyl acetate so as to have a solid content concentration of 30% by mass, was applied onto a 100 mm square aluminum foil (alloy number: 1N30, thickness: 9 µm, manufactured by UACJ Corporation), and then a 100 mm square PET film (Cosmoshine (registered trademark) A4100 (product number), thickness: 50 µm, manufactured by Toyobo Co., Ltd.) as a resin layer was bonded thereon. The resulting structure was cured at a drying temperature of 70°C for a drying time of 1 minute to produce a composite of an aluminum foil and a resin layer.

### (Example 8)

Example 8 was carried out in the same manner as in Example 1, except that the etched aluminum foil was used and the thickness of the PET film used as the resin layer was different from that of Example 1.

In Example 8, the composite body of the aluminum foil, which is a 100 mm square aluminum foil (alloy number: 1N30, thickness: 9 µm, manufactured by UACJ Corporation), and the resin layer was subjected to an etching treatment in advance by spraying using an aqueous solution having a sodium hydroxide concentration of 26% by mass and an aluminum ion concentration of 6.5% by mass. The etching treatment was carried out at a liquid temperature of 32°C for a dipping time of 10 seconds such that the thickness was 8 µm. The etching treatment was followed by washing with water and drying. In Example 8, a 100 mm square PET film (Cosmoshine (registered trademark) A4100 (product number), thickness: 20 µm, manufactured by Toyobo Co., Ltd.) was used as the resin layer.

### (Example 9)

Example 9 was carried out in the same manner as in Example 1, except that the copper foil was used and the thickness of the PET film used as the resin layer was different from that of Example 1.

A punched foil using an electrolytic copper foil having a thickness of 20 µm was subjected to dip coating with a negative type acrylic resin photoresist solution, and therefore both surfaces of the foil were coated at 5 µm each, followed by drying at 80°C. One surface of the copper foil was irradiated with UV light (ultraviolet light) at a light quantity of 100 mJ/cm² by a photo plotter through a photomask in which a through-hole pattern was drawn so that 7.1 through-holes having a hole diameter of 300 µm/mm², and 1 through-hole having a hole diameter of 80 µm/mm² can enter; and the entire surface of the other surface of the copper foil was irradiated with the above-mentioned UV light without providing a photomask. As a developing step, in order to dissolve the photoresist in the photomask portion, the copper foil after light irradiation was dipped in a sodium carbonate solution to remove the photoresist.

The resulting material was dipped in cupric chloride having a liquid temperature of 50°C to etch the copper foil. The dipping time at this time was 30 seconds. After the copper foil was etched, it was dipped in a sodium hydroxide (NaOH) solution to peel off the photoresist layer. Next, rust prevention treatment, washing, and drying were carried out. Thus, a copper foil was obtained. This copper foil was used in replace of the aluminum foil of Example 1 described above to produce a composite body. In addition, in Example 9, a 100 mm square PET film (Cosmoshine (registered trademark) A4100 (product number), thickness: 20 µm, manufactured by Toyobo Co., Ltd.) was used as the resin layer.

### (Comparative Example 1)

Comparative Example 1 was carried out in the same manner as in Example 1, except that the dipping time in the alkaline etching treatment of the composite body of the aluminum foil and the resin layer was 25 seconds as compared to Example 1.

### (Comparative Example 2)

Comparative Example 2 was carried out in the same manner as in Example 1, except that the dipping time in the alkaline etching treatment of the composite body of the aluminum foil and the resin layer was 50 seconds as compared to Example 1.

### (Comparative Example 3)

Comparative Example 3 was carried out in the same manner as in Example 3, except that the current density at the time of the electrolytic dissolution treatment (through-hole forming step) in the through-hole treatment was 60 A/dm² as compared to Example 3.

**[Table 3]**

| | Metal substrate | | | First resin layer | | | Second resin layer Second resin layer | | | | | | | Evaluation | | |
|---|---|---|---|---|---|---|---|---|---|---|---|---|---|---|---|---|
| | Material | Thickness (µm) | Thickness after penetration treatment (µm) | Substrate | Transmittance (%) | Thickness | Substrate | Transmittance (%) | Thickness | Average opening ratio G (%) | Opening ratio H (%) occupied by hole diameter of 100 µm or less | Through-hole Opening ratio H occupied by hole diameter of 100 µm or less/average opening ratio G (= ratio R) | Average opening ratio G/Metal substrate thickness T after penetration treatment (= ratio Q) | Image blurring | Shielding properties | Scratch resistance |
| Example 1 | Aluminum | 9 | 3.1 | PET | 90 | 125 | - | - | - | 70 | 0.6 | 0.00857 | 22.6 | AA | B | A |
| Example 2 | Aluminum | 9 | 3.3 | PET | 90 | 125 | - | - | - | 60 | 1.2 | 0.02000 | 18.2 | AA | A | A |
| Example 3 | Aluminum | 9 | 3.9 | PET | 90 | 125 | - | - | | 50 | 3.3 | 0.06600 | 12.8 | A | AA | A |
| Example 4 | Aluminum | 9 | 3.1 | PET | 90 | 125 | PET | 90 | 125 | 70 | 0.6 | 0.00857 | 22.6 | AA | A | AA |
| Example 5 | Aluminum | 9 | 3.1 | Acrylic | 90 | 50 | - | - | | 70 | 0.6 | 0.00857 | 22.6 | AA | A | A |
| Example 6 | Aluminum | 9 | 3.1 | Polyimide | 88 | 25 | - | - | - | 60 | 1.2 | 0.02000 | 19.4 | AA | A | A |
| Example 7 | Aluminum | 9 | 3.1 | PET | 90 | 50 | - | - | - | 70 | 0.6 | 0.00857 | 22.6 | AA | A | A |
| Example 8 | Aluminum | 8 | 2.1 | PET | 90 | 20 | - | - | - | 70 | 0.6 | 0.00857 | 33.3 | AA | A | A |
| Example 9 | Copper | 20 | 20 | PET | 90 | 20 | - | - | - | 50 | 0.5 | 0.01000 | 2.5 | A | AA | A |
| Comparative Example 1 | Aluminum | 9 | 4.3 | PET | 90 | 125 | - | - | - | 40.0 | 10.0 | 0.25000 | 9.3 | C | AA | A |
| Comparative Example 2 | Aluminum | 9 | 2.2 | PET | 90 | 125 | - | - | - | 90.0 | 0.01 | 0.00011 | 40.9 | AA | C | A |
| Comparative Example 3 | Aluminum | 9 | 3.9 | PET | 90 | 125 | - | - | - | 50.0 | 30.0 | 0.60000 | 12.8 | C | AA | A |

As shown in Table 3, Examples 1 to 9 were capable of achieving better results with respect to image blurring than Comparative Example 1 and Comparative Example 3, and were capable of achieving better results with respect to shielding properties than Comparative Example 2. In Comparative Example 1, the average opening ratio was small, and the evaluation of image blurring was poor. In Comparative Example 2, the average opening ratio was large and the evaluation of shielding properties was poor. In Comparative Example 3, the ratio R represented by the opening ratio H occupied by a hole diameter of 100 µm or less/the average opening ratio G was large, and the evaluation of image blurring was poor.

In addition, from a comparison of Example 1 with Example 4, it was found that the scratch resistance was further improved in a case where the resin layer was provided on each surface of the metal substrate.

In addition, from comparisons of Example 1, Example 4, Example 5, Example 7 and Example 8 with Example 2, Example 3, Example 6 and Example 9, it was found that the image blurring was further improved in a case where the ratio R represented by the opening ratio H occupied by a hole diameter of 100 µm or less/the average opening ratio G was less than 0.01.

From comparisons of Example 1, Example 2, and Example 4 to Example 8 with Example 3 and Example 9, it was found that the image blurring was further improved in a case where the average opening ratio was 60% to 70%.

### Explanation of References

- 10:: laminate
- 12:: metal substrate
- 12a, 17a, 20a:: front surface
- 12b, 20b:: back surface
- 13:: through-hole
- 14:: resin layer
- 15:: adhesive layer
- 17:: object
- 20:: metal member
- 21:: adhesive
- 23:: composite
- 24:: aluminum hydroxide film
- T:: thickness

## Claims

1. A laminate comprising:
a metal substrate provided with a plurality of through-holes penetrating therethrough in a thickness direction; and
a resin layer provided on at least one surface of the metal substrate, wherein, in a case where an average opening ratio of the through-holes is G%, and an opening ratio of the through-holes having an opening diameter of 100 µm or less is H%,
the average opening ratio G% satisfies 50% ≤ average opening ratio G% ≤ 80%, and
a ratio R represented by the opening ratio H%/the average opening ratio G% satisfies 0.0001 ≤ R ≤ 0.5.

2. The laminate according to claim 1,
wherein, in a case where a thickness of the metal substrate is T µm, a ratio Q represented by the average opening ratio G%/the thickness T µm satisfies 1 ≤ Q ≤ 50.

3. The laminate according to claim 1 or 2,
wherein the resin layer is provided on each surface of the metal substrate.

4. The laminate according to any one of claims 1 to 3,
wherein the resin layer has a total light transmittance of 60% or more in a wavelength range of 380 to 780 nm.

5. The laminate according to any one of claims 1 to 4,
wherein the resin layer is made of any one of polyethylene terephthalate, polyethylene, polypropylene, acrylic, or polyimide.

6. The laminate according to any one of claims 1 to 5,
wherein the resin layer has an average thickness of 12 to 200 µm.

7. The laminate according to any one of claims 1 to 6,
wherein the metal substrate has an average thickness of 5 µm or less.

8. The laminate according to any one of claims 1 to 7,
wherein the ratio R satisfies 0.0001 ≤ R ≤ 0.01.

9. The laminate according to any one of claims 1 to 8,
wherein the metal substrate is made of a metal selected from the group consisting of aluminum, copper, silver, gold, platinum, stainless steel, steel, titanium, tantalum, molybdenum, niobium, zirconium, tungsten, beryllium copper, phosphor bronze, brass, nickel silver, tin, zinc, iron, nickel, Permalloy, nichrome, Alloy 42, Kovar, Monel, Inconel, and Hastelloy.
